(19) Europäisches Patentamt

European Patent Office

Office européen des brevets

(11) **EP 1 728 550 A1**

(12) **EUROPEAN PATENT APPLICATION**
published in accordance with Art. 158(3) EPC

(43) Date of publication:
06.12.2006 Bulletin 2006/49

(51) Int Cl.:
*B01J 13/04* (2006.01)        *A61J 3/07* (2006.01)
*A61K 9/127* (2006.01)        *A61K 9/14* (2006.01)
*A61K 47/24* (2006.01)        *B01J 19/00* (2006.01)

(21) Application number: 05721301.9

(22) Date of filing: 23.03.2005

(86) International application number:
PCT/JP2005/005251

(87) International publication number:
WO 2005/089926 (29.09.2005 Gazette 2005/39)

(84) Designated Contracting States:
AT BE BG CH CY CZ DE DK EE ES FI FR GB GR
HU IE IS IT LI LT LU MC NL PL PT RO SE SI SK TR

(30) Priority: 23.03.2004 JP 2004084216

(71) Applicant: KYOWA HAKKO KOGYO CO., LTD.
Chiyoda-ku,
Tokyo 100-8185 (JP)

(72) Inventors:
• KIGOSHI, Makoto
. (JP)
• YAGI, Nobuhiro
. (JP)
• KATO, Yasuki
. (JP)

(74) Representative: Keller, Günter
Lederer & Keller
Patentanwälte
Prinzregentenstrasse 16
D-80538 München (DE)

(54) **METHOD FOR PRODUCING COATED FINE PARTICLES**

(57)    The present invention provides a method of producing coated fine particles in which core fine particles is coated with a coating layer, which comprises the steps of preparing a liquid (liquid A) containing a polar organic solvent in which core fine particles are dispersed and a component constituting a coating layer is dissolved; preparing a liquid (liquid B) which is miscible with the liquid A and does not contain a polar organic solvent or contains a polar organic solvent in a ratio lower than that in the liquid A; and letting the liquid A flow from at least one inlet of a device for producing coated fine particles equipped with an in-line mixing means having two or more inlets and one or more outlet(s) and letting the liquid B flow from at least one remaining inlet to mix the liquids thereby coating the core fine particles with the coating layer.

Fig.1

# Fig.1

**EP 1 728 550 A1**

**Description**

Technical Field

The present invention relates to a method of producing coated fine particles.

Background Art

Heretofore, a lot of techniques related to methods of producing coated fine particles have been disclosed, for pharmaceutical products, foods, agrochemicals, drugs for animals and the like. The coating of fine particles (fine particles to be coated) with a coating layer is carried out for imparting a function to fine particles such as to inhibit an effect given by an external factor, or to selectively receive an effect given by an external factor as a trigger causing change in the fine particles by the effect. As one of them, a method of coating fine particles with a lipid membrane in a liquid has been reported (see Patent document 1). In the method, fine particles are coated with a lipid membrane by reducing the ratio of a polar organic solvent in an aqueous solution containing the polar organic solvent in which fine particles are dispersed and a lipid is dissolved, the coating is carried out in the liquid, and for example, coated fine particles with a size suitable for such as fine particles for intravenous injection is produced very efficiently. In addition, in the Patent document 1, as a means for reducing the ratio of a polar organic solvent in an aqueous solution containing the polar organic solvent, a method of mixing liquid containing water with the aqueous solution containing the polar organic solvent is shown.

On the other hand, an in-line mixing means is industrially used as a method of mixing two or more types of liquids. Further, the in-line mixing means is used in a method of producing a polymer complex and liposome produced by a method without resort to coating (see Patent document 2 and Patent document 3).

Patent Document 1: International Application WO 02/28367
Patent Document 2: JP-T-2002-522468
Patent Document 3: JP-T-2002-529240

Disclosure of the Invention

Problems to be Solved by the Invention

An object of the present invention is to provide a method of industrially producing coated fine particles in which core fine particles is coated with a coating layer.

Means for Solving the Problems

The present invention relates to the following (1) to (11).

(1) A method of producing coated fine particles in which core fine particles is coated with a coating layer, which comprises the steps of:

preparing a liquid (liquid A) containing a polar organic solvent in which core fine particles are dispersed and a coating layer component constituting the coating layer is dissolved;
preparing a liquid (liquid B) which is miscible with the liquid A and does not contain a polar organic solvent or contains a polar organic solvent in a ratio lower than that in the liquid A; and
letting the liquid A flow from at least one inlet of a device for producing coated fine particles equipped with an in-line mixing means having two or more inlets and one or more outlet(s) and letting the liquid B flow from at least one remaining inlet to mix the liquids thereby coating the core fine particles with a coating layer.

(2) The production method according to the above (1), wherein the device for producing coated fine particles includes a pump, a flow path and the in-line mixing means.
(3) The production method according to the above (1), wherein the device for producing coated fine particles includes a manual pump, a flow path and the in-line mixing means.
(4) The production method according to any one of the above (1) to (3), wherein the coating layer component is one or more substance(s) selected from lipids, surfactants and polymers.
(5) The production method according to any one of the above (1) to (4), wherein the coating layer is a lipid membrane.
(6) The production method according to any one of the above (1) to (5), wherein the core fine particles are fine particles containing as a constituent component a drug, a lipid assembly, liposome, an emulsion fine particles, a polymer, a metal colloid or fine particles preparation.

(7) The production method according to any one of the above (1) to (5), wherein the core fine particles are fine particles containing as a constituent component a complex obtained by combining two or more of a drug, a lipid assembly, liposome, an emulsion fine particles, a polymer, a metal colloid or fine particles preparation.

(8) The production method according to any one of the above (1) to (5), wherein the core fine particles are fine particles containing as a constituent component a complex of a drug and liposome.

(9) The production method according to any one of the above (1) to (8), wherein the polar organic solvent is one or more member(s) selected from alcohols, glycols and polyalkylene glycols.

(10) The production method according to any one of the above (1) to (8), wherein the polar organic solvent is ethanol.

(11) Coated fine particles which can be produced by the production method according to any one of the above (1) to (10).

Effect of the Invention

According to the present invention, a continuous and simple industrial production method of coated fine particles in which core fine particles is coated with a coating layer is provided. Further, according to the present invention, a production method of coated fine particles in which a drug is efficiently and/or rigidly incorporated is provided.

Brief Description of the Drawings

[Fig. 1] Fig. 1 is a schematic diagram of a basic device for producing coated fine particles to be used in the present invention.

[Fig. 2] Fig. 2 is a schematic diagram of an application example (1) of a device for producing coated fine particles to be used in the present invention.

[Fig. 3] Fig. 3 is a schematic diagram of an application example (2) of a device for producing coated fine particles to be used in the present invention.

[Fig. 4] Fig. 4 is a schematic diagram of a conventional device for producing coated fine particles.

Description of Signs

| 1: | In-line mixing means having two inlets and one outlet |
| 2, 3, and 4: | Flow path |
| 5 and 6: | Pump |
| 7: | Liquid tank |
| 8: | In-line mixing means having two inlets and one outlet |
| 9 and 10: | Flow path |
| 11 and 12: | Pump |
| 13: | In-line mixing means having two inlets and one outlet |
| 14 and 15: | Flow path |
| 16: | Pump |
| 17 and 18: | Liquid tank |
| 19: | Flow path |
| 20: | Pump |

Liquid A:A liquid containing a polar organic solvent in which core fine particles are dispersed and a coating layer component is dissolved

Liquid B: A liquid which is miscible with the liquid A and does not contain a polar organic solvent or contains a polar organic solvent in a ratio lower than that in the liquid A

Liquid C: A suspension obtained by mixing the liquid A and the liquid B

Liquid D: A liquid containing a polar organic solvent in which core fine particles are dispersed

Liquid E: A liquid in which a coating layer component is dissolved in a solvent containing a polar organic solvent that is the same as or different from the polar organic solvent in the liquid D

Liquid F: A solvent other than a polar organic solvent

Best Mode for Carrying Out the Invention

A device for producing coated fine particles equipped with an in-line mixing means in the present invention may be any device as long as it is for producing coated fine particles equipped with an in-line mixing means having two or more inlets and one or more outlet(s). The in-line mixing means include a case where a plurality of in-line mixing means is connected. Further, the production device may be provided with a flow path connected to the in-line mixing means, and the flow path may also serve as an in-line mixing means. Further, the production device may be provided with a pump, and the pump is connected to the inlet and/or the outlet of the in-line mixing means via the flow path.

The coated fine particles in the present invention are fine particles comprising at least core fine particles and a coating layer, and are fine particles formed by coating the outside of the core fine particles with a coating layer component constituting the coating layer.

The core fine particles in the present invention are fine particles containing as a constituent component, for example, a drug, a lipid assembly, liposome, an emulsion particles, a polymer, a metal colloid, fine particles preparation or the like. Preferred examples include fine particles containing at least a drug as a constituent component. The core fine particles in the present invention may contain as a constituent component a complex obtained by combining two or more of a drug, a lipid assembly, liposome, an emulsion particles, a polymer, a metal colloid, fine particles preparation and the like, or may contain as a constituent component a complex obtained by combining a drug, a lipid assembly, liposome, an emulsion particles, a polymer, a metal colloid, fine particles preparation or the like with another compound (such as a sugar, a lipid or an inorganic compound). Preferred examples include fine particles containing as a constituent component a complex of a drug and liposome.

The drug includes a drug which takes the form of fine particles in the solvent in the liquid A, a drug which forms a complex with another component constituting core fine particles and takes the form of fine particles in the solvent in the liquid A and the like, and examples thereof include substances having a pharmacological activity among a protein, a peptide, a nucleic acid, a low-molecular compound, a saccharide, a high-molecular compound, a lipid compound, a metal compound and the like. Preferred examples include a nucleic acid and more preferred examples include one or more substance (s) selected from a gene, DNA, RNA, an oligonucleotide, a plasmid, and siRNA.

Examples of the protein or the peptide include bradykinin, angiotensin, oxytocin, vasopressin, adrenocorticotropin, calcitonin, insulin, glucagon, cholecystokinin, $\beta$-endorphin, a melanocyte inhibiting factor, a melanocyte stimulating hormone, a gastrin antagonist, neurotensin, somatostatin, brucine, cyclosporine, enkephalin, transferrin, an Arg-Gly-Asp (RGD) peptide, a thyroid hormone, a growth hormone, a gonadotropic hormone, a luteinizing hormone, asparaginase, arginase, uricase, carboxypeptidase, glutaminase, superoxide dismutase, a tissue plasminogen activator, streptokinase, interleukin, interferon, muramyl dipeptide, thymopoietin, a granulocyte colony stimulating factor, a granulocyte macrophage colony stimulating factor, erythropoietin, thrombopoietin, a trypsin inhibitor, lysozyme, an epidermal growth factor (EGF), an insulin-like growth factor, a nerve growth factor, a platelet-derived growth factor, a transforming growth factor, an endothelial cell growth factor, a fibroblast growth factor, a glial growth factor, thymosin and a specific antibody (such as an anti-EGF receptor antibody) and the like.

Examples of the nucleic acid include oligonucleotide such as an antisense oligonucleotide and a sense oligonucleotide, a gene, DNA, RNA, a plasmid, siRNA and the like. The nucleic acid includes derivatives in which an oxygen atom or the like contained in such as a phosphate moiety or an ester moiety in the nucleic acid structure has been substituted with another atom such as a sulfur atom. Incidentally, siRNA means a short double-stranded RNA.

Examples of the low-molecular compound include epsilon-aminocaproic acid, arginine hydrochloride, potassium L-aspartate, tranexamic acid, bleomycin sulfate, vincristine sulfate, cefazolin sodium, cephalothin sodium, citicoline, cytarabine, gentamicin sulfate, vancomycin hydrochloride, kanamycin sulfate, amikacin sulfate and the like.

Examples of the saccharide include sodium chondroitin sulfate, heparin sodium, dextran fluorescein and the like.

Examples of the high-molecular compound include sodium polyethylene sulfonate, a copolymer of divinyl ether with maleic anhydride (DIVEMA), a bonded product of a styrene-maleic anhydride copolymer with neocarzinostatin (SMANCS) and the like.

Examples of the lipid compound include vitamin D, vitamin E and the like.

Examples of the metal compound include cisplatin and the like.

The lipid assembly or the liposome is composed of, for example, lipid and/or a surfactant or the like. The lipid may be any of a simple lipid, a complex lipid and a derived lipid, and examples thereof include a phospholipid, a glyceroglycolipid, a sphingoglycolipid, a sphingoid, a sterol and the like, and preferred examples include a phospholipid. Further, examples of the lipid also include surfactants (the same definition as the surfactant described below), a polymer (the same definition as the polymer described below, specifically dextran, etc.), and lipid derivative such as a polyoxyethylene derivative (specifically, polyethylene glycol, etc.), and preferred examples include a polyethylene glycolated lipid. Examples of the surfactant include a nonionic surfactant, an anionic surfactant, a cationic surfactant, a zwitterionic surfactant and the like.

Examples of the phospholipid include natural and synthetic phospholipids such as phosphatidylcholine (specifically, soybean phosphatidylcholine, egg yolk phosphatidylcholine (EPC), distearoyl phosphatidylcholine, dipalmitoyl phosphatidylcholine, dimyristoyl phosphatidylcholine, dioleoyl phosphatidylcholine, etc.), phosphatidylethanolamine (specifically, distearoyl phosphatidylethanolamine (DSPE), dipalmitoyl phosphatidylethanolamine, dioleoyl phosphatidylethanolamine, etc.), glycerophospholipid (specifically, phosphatidylserine, phosphatidic acid, phosphatidylglycerol, phosphatidylinositol, lysophosphatidylcholine, etc.) sphingophospholipid (specifically sphingomyelin, ceramide phosphoethanolamine, ceramide phosphoglycerol, ceramide phosphoglycerophosphate, etc.) glycerophosphono lipid, sphingophosphonolipid, natural lecithin (specifically, egg yolk lecithin, soybean lecithin, etc.) and hydrogenated phospholipid (specifically hydrogenated phosphatidylcholine, etc.).

Examples of the glyceroglycolipid include sulfoxyribosyl glyceride, diglycosyl diglyceride, digalactosyl diglyceride, galactosyl diglyceride, glycosyl diglyceride and the like.

Examples of the sphingoglycolipid include galactosyl cerebroside, lactosyl cerebroside, ganglioside and the like.

Examples of the sphingoid include sphingan, icosasphingan, sphingosine, a derivative thereof and the like. Examples of the derivative thereof include those in which $-NH_2$ of sphingan, icosasphingan, sphingosine or the like is replaced with $-NHCO(CH_2)_xCH_3$ (in the formula, x represents an integer of 0 to 18, in particular, 6, 12 or 18 is preferred) and the like.

Examples of the sterol include cholesterol, dehydrocholesterol, lanosterol, β-sitosterol, campesterol, stigmasterol, brassicasterol, ergocasterol, fucosterol, 3β-[N-(N'N'-dimethylaminoethyl)carbamoyl cholesterol (DC-Chol) and the like.

Examples of the lipid other than these include N-[1-(2,3-dioleoylpropyl)]-N,N,N-trimethylammonium chloride (DOTAP), N-[1-(2,3-dioleoylpropyl)]-N,N- dimethylamine (DODAP), N-[1-(2,3-dioleyloxypropyl)-N,N,N-trimethylammonium chloride (DOTMA), 2,3-dioleyloxy-N-[2-(sperminecarboxyamido)ethyl]-N,N-dimethyl-1-propanaminium trifluoroacetate (DOSPA), N-[1-(2,3-ditetradecyloxypropyl)]-N,N-dimethyl-N-hydroxyethylammonium bromide (DMRIE), N-[1-(2,3-dioleyloxypropyl)]-N,N-dimethyl-N-hydroxyethylammonium bromide (DORIE) and the like.

Examples of the nonionic surfactants include polyoxyethylene sorbitan monooleate (specifically, Polysorbate 80, etc.), polyoxyethylene polyoxypropylene glycol (specifically, Pluronic F68, etc.), a sorbitan fatty acid (specifically, sorbitan monolaurate, sorbitan monooleate, etc.), a polyoxyethylene derivative (specifically, polyoxyethylene hydrogenated castor oil 60, polyoxyethylene lauryl alcohol, etc.), a glycerol fatty acid ester and the like.

Examples of the anionic surfactants include acylsarcosine, sodium alkylsulfate, alkylbenzene sulfonate, a sodium fatty acid having 7 to 22 carbon atoms and the like. Specific examples include sodium dodecyl sulfate, sodium lauryl sulfate, sodium cholate, sodium deoxycholate, sodium taurodeoxycholate and the like.

Examples of the cationic surfactants include an alkylamine salt, an acylamine salt, a quaternary ammonium salt, an amine derivative and the like. Specific examples include benzalkonium chloride, an acylaminoethyldiethylamine salt, an N-alkylpolyalkylpolyamine salt, a polyethylene polyamide fatty acid, cetyltrimethylammonium bromide, dodecyltrimethylammonium bromide, alkylpolyoxyethyleneamine, N-alkylaminopropylamine, a triethanolamine fatty acid ester and the like.

Examples of the zwitterionic surfactants include 3-[3-cholamidopropyl]dimethylammonio]-1-propane sulfonate, N-tetradecyl-N,N-dimethyl-3-ammonio-1-propane sulfonate and the like.

In the liposome, these lipid and surfactants are used alone or in combination, and preferably they are used in combination. As the combination in the case where they are used in combination, for example, a combination of two or more components selected from a hydrogenated soybean phosphatidylcholine, a polyethylene glycolated phospholipid and cholesterol, a combination of two or more components selected from distearoyl phosphatidylcholine, a polyethylene glycolated phospholipid and cholesterol, a combination of EPC and DOTAP, a combination of EPC, DOTAP and a polyethylene glycolated phospholipid, a combination of EPC, DOTAP, cholesterol and a polyethylene glycolated phospholipid, and the like can be exemplified.

Further, the liposome may contain a membrane stabilizer such as a sterol including cholesterol, an antioxidant such as tocopherol or the like as needed.

Examples of the lipid assembly include a spherical micelle, a spherical reversed micelle, a sausage-shaped micelle, a sausage-shaped reversed micelle, a plate-shaped micelle, a plate-shaped reversed micelle, hexagonal I, hexagonal II and an associated product comprising two or more lipid molecules.

Examples of the emulsion particles include oil-in-water (o/w) emulsion particles such as a fat emulsion, an emulsion composed of a nonionic surfactant and soybean oil, lipid emulsion and lipid nanosphere, water-in-oil-in-water (w/o/w) emulsion particles and the like.

Examples of the polymer include natural polymers such as albumin, dextran, chitosan, dextran sulfate and DNA, synthetic polymers such as poly-L-lysine, polyethyleneimine, polyaspartic acid, a copolymer of styrene with maleic acid, a copolymer of isopropylacrylamide with acrylpyrrolidone, PEG-modified dendrimer, polylactic acid, polylactic acid polyglycolic acid and polyethylene glycolated polylactic acid, a salt thereof and the like.

Here, the salt of the polymer includes, for example, a metal salt, an ammonium salt, an acid addition salt, an organic amine addition salt, an amino acid addition salt and the like. Examples of the metal salt include alkali metal salts such as a lithium salt, a sodium salt and a potassium salt, alkaline earth metal salts such as a magnesium salt and a calcium salt, an aluminum salt, a zinc salt and the like. Examples of the ammonium salt include salts of ammonium, tetramethylammonium and the like. Examples of the acid addition salt include inorganic acid salts such as a hydrochloric acid salt, a sulfuric acid salt, a nitric acid salt and a phosphoric acid salt, and organic acid salts such as an acetic acid salt, a maleic acid salt, a fumaric acid salt and a citric acid salt. Examples of the organic amine addition salt include addition salts of morpholine, piperidine and the like, and examples of the amino acid addition salt include addition salts of glycine, phenylalanine, aspartic acid, glutamic acid, lysine and the like.

Examples of the metal colloid include metal colloids including gold, silver, platinum, copper, rhodium, silica, calcium, aluminum, iron, indium, cadmium, barium, lead and the like.

Examples of the fine particles preparation include a microsphere, a microcapsule, a nanocrystal, lipid nanoparticles, a polymeric micelle and the like.

In the case where the core fine particles is core fine particles containing a drug, the core fine particles preferably contains a charged substance which has an electrostatic charge opposite to that of the drug, more preferably contains a lipid (a cationic lipid or an anionic lipid described below) which has an electrostatic charge opposite to that of the drug. Here, the electrostatic charge opposite to that of the drug includes an electric charge, surface polarization and the like generating electrostatic attraction to an electric charge in the molecule in the drug, intramolecular polarization or the like.

The charged substance contained in the core fine particles is classified into a cationic substance exhibiting a cationic property and an anionic substance exhibiting an anionic property. However, even if it is a zwitterionic substance having both cationic group and anionic group, the relative electronegativity changes depending on the pH, bonding to another substance or the like, it can be classified into a cationic substance or an anionic substance depending on the conditions. Such a charged substance may be used as a constituent component of the above-mentioned core fine particles or may be used by adding it to the constituents component of the core fine particles.

Examples of the cationic substance include the cationic substances among those illustrated in the above-mentioned definition of the core fine particles (specifically, a cationic lipid, a cationic surfactant (the same definition as above), a cationic polymer and the like), a protein or a peptide, with which a complex can be formed at a pH equal to or less than an isoelectric point, and the like.

Examples of the cationic lipid include DOTAP, DODAP, DOTMA, DOSPA, DMRIE, DORIE, DC-Chol and the like. Examples of the cationic polymer include poly-L-lysine, polyethyleneimine, polyfect, chitosan and the like.

The protein or the peptide with which a complex can be formed at a pH equal to or less than an isoelectric point is not particularly limited as long as it is a protein or a peptide with which a complex can be formed at a pH equal to or less than the isoelectric point of the substance. Examples thereof include albumin, orosomucoid, globulin, fibrinogen, pepsin, ribonuclease T1 and the like.

Examples of the anionic substance include the anionic substances among those illustrated in the above-mentioned definition of the core fine particles (specifically, an anionic lipid, an anionic surfactant (the same definition as above), an anionic polymer and the like), a protein or a peptide, with which a complex can be formed at a pH equal to or greater than an isoelectric point, a nucleic acid and the like.

Examples of the anionic lipid include phosphatidylserine, phosphatidylglycerol, phosphatidylinositol, phosphatidic acid and the like.

Examples of the anionic polymer include polyaspartic acid, a copolymer of styrene with maleic acid, a copolymer of isopropylacrylamide with acrylpyrrolidone, PEG-modified dendrimer, polylactic acid, polylactic acid polyglycolic acid, polyethylene glycolated polylactic acid, dextran sulfate, sodium dextran sulfate, chondroitin sulfate, sodium chondroitin sulfate, hyaluronic acid, chondroitin, dermatan sulfate, heparan sulfate, heparin, ketaran sulfate, dextran fluorescein anionic and the like.

The protein or the peptide with which a complex can be formed at a pH equal to or greater than an isoelectric point is not particularly limited as long as it is a protein or a peptide with which a complex can be formed at a pH equal to or greater than the isoelectric point of the substance. Examples thereof include albumin, orosomucoid, globulin, fibrinogen, histone, protamine, ribonuclease, lysozyme and the like.

Examples of the nucleic acid as the anionic substance include DNA, RNA, a plasmid, siRNA, an oligonucleotide and the like. It may have any length and any sequence as long as it does not exhibit a physiological activity.

The core fine particles can be obtained as a commercially available one, or can be produced by or in accordance with a known method. For example, in the production of core fine particles containing as a constituent component liposome, which is one of the core fine particles, a known method of preparing liposome can be applied. As the known liposome preparation method, for example, liposome preparation method by Bangham, et al. [see "Journal of Molecular Biology" (J. Mol. Biol.), vol. 13, pp. 238-252 (1965)], an ethanol injection method [see "Journal of Cell Biology" (J. Cell Biol.), vol. 66, pp. 621-634 (1975)], a French press method [see "FEBS Letters" (FEBS Lett.), vol. 99, pp. 210-214 (1979)], a freeze-thaw method [see "Archives of Biochemistry and Biophysics" (Arch. Biochem. Biophys.), vol. 212, pp. 186-194 (1981)], a reverse phase evaporation method [see "Proceedings of the National Academy of Science United States of America" (Proc. Natl. Acad. Sci. USA), vol. 75, pp. 4194-4198 (1978)], a pH gradient method (see, for example, Japanese Patent No. 2,572,554, Japanese Patent No. 2,659,136, etc.) and the like. As a solution for suspending liposome in the production of the liposome, for example, water, an acid, an alkali, any of various buffers, a physiological saline solution, an amino acid infusion or the like can be used. Further, in the production of the liposome, it is also possible to add an antioxidant such as citric acid; ascorbic acid, cysteine or ethylenediamine tetraacetic acid (EDTA), a isoosmotic agent such as glycerol, glucose, sodium chloride or the like. Further, the liposome can be prepared by dissolving lipid or the like in, for example, an organic solvent such as ethanol, distilling off the solvent, adding a physiological saline solution or the like and stirring the mixture by shaking, thereby forming liposome.

Further, surface improvement of the liposome can be optionally carried out using, for example, a nonionic surfactants (the same definition as above), a cationic surfactants (the same definition as above), an anionic surfactants (the same definition as above), a polymer, a polyoxyethylene derivative or the like, and such a surface-improving liposome is also used as a constituent component of the core particles in the present invention [see "Stealth Liposome", edited by D. D. Lasic and F. Martin, CRC Press Inc., USA, pp. 93-102 (1995)]. Examples of the polymer include dextran, pullulan, mannan, amylopectin, hydroxyethylstarch and the like. Examples of the polyoxyethylene derivative include Polysorbate 80, Pluronic F68, polyoxyethylene hydrogenated castor oil 60, polyoxyethylene lauryl alcohol, 1,2-distearoyl-sn-glycero-3-phosphoethanolamine-N-[methoxy(polyethylene glycol)-2000] (PEG-DSPE).

An average particles diameter of the liposome can be freely selected upon demand. Examples of a method of adjusting the average particles diameter include an extrusion method and a method in which a large multilamellar liposome vesicle (MLV) is mechanically pulverized (specifically using Manton-gaulin, a microfluidizer or the like) [see "Emulsion and Nanosuspensions for the Formulation of Poorly Soluble Drugs", edited by R. H. Muller, S. Benita and B. Bohm, Scientific Publishers, Stuttgart, Germany, pp. 267-294 (1998)] and the like.

In addition, the method of producing a complex obtained by combining two or more substances selected from, for example, a drug, a lipid assembly, liposome, an emulsion particles, a polymer, a metal colloid, fine particles preparation and the like, which constitute the core fine particles (specific examples include a complex of liposome or a lipid assembly containing a cationic lipid and a nucleic acid, a complex of a polymer containing a cationic polymer such as poly-L-lysine and a nucleic acid, a complex of liposome or a lipid assembly containing an anionic lipid such as phosphatidic acid and a protein, a complex of a polymer containing an anionic polymer such as styrene-maleic acid and a protein, a complex of liposome or a lipid assembly containing a cationic lipid and a protein, a complex of a polymer containing a cationic polymer such as poly-L-lysine and a protein and the like) may be, for example, a production method in which a drug is simply mixed with a lipid assembly, liposome, a polymer or the like in water. At this time, a sieve step, a sterilization step or the like can be further added as needed. Further, it is also possible to perform the formation of the complex in any of various solvents such as acetone and an ether. For example, a nucleic acid and a lipid are dissolved in an organic solvent such as ethanol, the solvent is distilled off, a physiological saline solution or the like is added thereto, and the mixture is stirred by shaking, whereby a nucleic acid complex can also be formed. As another method of forming a complex, for example, liposome is prepared using a cationic substance and a polyethylene glycolated lipid [specifically, polyethylene glycol phosphatidyl ethanolamine (more specifically, 1,2-distearoyl-sn-glycero-3-phosphoethanolamine-N-[methoxy(polyethylene glycol)- 2000] (PEG-DSPE) or the like), polyoxyethylene hydrogenated castor oil 60, Cremophor EL and the like] or the like in water, then, for example, a nucleic acid is added thereto, and further an anionic polymer is added thereto, whereby a multicomplex can also be formed.

As for the size of the core fine particles, an average particles diameter is preferably several nanometers to several hundreds of micrometers, more preferably 10 nm to 5 $\mu$m, further more preferably 50 nm to 300 nm, the most preferably 50 nm to 200 nm.

Examples of the coating layer component include the lipids, the surfactants, the polymers illustrated in the above-mentioned definition of the core fine particles and the like, preferred examples include one or more substance(s) selected from the lipids and the surfactants illustrated in the above-mentioned definition of the core fine particles, more preferred examples include one or more substance(s) selected from lipids and surfactants, which will make the coating layer a lipid membrane, and further more preferred examples include a phospholipid.

Further, examples of the lipid to be used in the case where the coating layer is a lipid membrane include a synthetic lipid and the like. Examples of the synthetic lipid include fluorinated phosphatidylcholine, a fluorinated surfactant, dialkylammonium bromide and the like. These may be used alone or in combination with another lipid or the like. Further, in the case where the coating layer is a lipid membrane, it is preferred that a water-soluble polymer derivative is also used as one of the coating layer components. Examples of the water-soluble polymer derivative include a polyethylene glycolated lipid [specifically, polyethylene glycol phosphatidyl ethanolamine (more specifically, 1,2-distearoyl-sn-glycero-3-phosphoethanolamine-N-[methoxy(polyethylene glycol)-2000] (PEG-DSPE) and the like), polyoxyethylene hydrogenated castor oil 60, Cremophor EL or the like], a polyethylene glycol sorbitan fatty acid ester (specifically, polyoxyethylene sorbitan monooleate and the like), a polyethylene glycol fatty acid ester, polyglycerolated lipid (specifically, polyglycerol phosphatidyl ethanolamine and the like), a polyglycerol fatty acid ester and the like, and more preferred examples include a polyethylene glycolated lipid.

The coated fine particles of the present invention can be produced, for example, by a production method comprising the steps of preparing a liquid (liquid A) containing a polar organic solvent in which core fine particles are dispersed and a coating layer component is dissolved; preparing a liquid (liquid B) which is miscible with the liquid A and does not contain a polar organic solvent or contains a polar organic solvent in a ratio lower than that in the liquid A; and letting the liquid A flow from at least one inlet of an in-line mixing means of a device for producing coated fine particles equipped with the in-line mixing means having two or more inlets and one or more outlet(s) and letting the liquid B flow from at least one remaining inlet to mix the liquids thereby coating the core fine particles with a coating layer. In this case, the coated fine particles can be obtained in the form of a suspension (liquid C). Further, the solvent in the liquid A is preferably a solvent in which the core fine particles is not dissolved and the coating layer component is dissolved. In the liquid C obtained by mixing the liquid A and the liquid B, the core fine particles is not dissolved and the coating layer component is not dissolved or is assembled. The liquid A is a liquid containing a polar organic solvent and the liquid B is a liquid containing a solvent other than a polar organic solvent, however, the liquid A may contain a solvent other than a polar organic solvent as long as the ratio of the solvent other than a polar organic solvent is lower than that in the liquid B. The liquid B may also include a polar organic solvent as long as the ratio of the polar organic solvent is lower than that in the liquid A.

In the present invention, the core fine particles being dispersed means a state in which the core fine particles are suspended, emulsified or made into an emulsion, preferably suspended, and also includes a state in which most of the core fine particles are dispersed and the rest are dissolved or a state in which a portion is deposited. However, it is preferred that almost all or all the core fine particles are dispersed. Further, the coating layer component being dissolved also includes a state in which most of the coating layer component is dissolved and the rest is dispersed, however, it is preferred that almost all or all the coating layer component is dissolved.

Examples of the polar organic solvent in the above-mentioned liquid A and the liquid B include alcohols such as methanol, ethanol, n-propanol, 2-propanol, n-butanol, 2-butanol, and tert-butanol, glycols such as glycerol, ethylene glycol and propylene glycol, polyalkylene glycols such as polyethylene glycol and the like, and preferred examples include ethanol. Examples of the solvent other than a polar organic solvent in the above-mentioned liquid A and the liquid B include water, liquid carbon dioxide, a liquid hydrocarbon, a halogenated carbon, a halogenated hydrocarbon and the like, and preferred examples include water. Further, the liquid A and the liquid B may contain an ion, a buffer component or the like.

The combination of a polar organic solvent with a solvent other than the polar organic solvent is preferably a combination of solvents that are miscible with each other and can be selected by considering the solubility of the above-mentioned core fine particles and the solubility of the above-mentioned coating layer component in the solvents in the liquids A to C. On the other hand, the above-mentioned core fine particles preferably has low solubility in any of the solvents in the liquids A to C, and also preferably has low solubility in any of the polar organic solvent and the solvent other than a polar organic solvent. The coating layer component preferably has low solubility in the liquid B and the solvent in the liquid C, and preferably has high solubility in the solvent in the liquid A, and preferably has high solubility in the polar organic solvent and preferably has low solubility in the solvent other than a polar organic solvent.

The ratio of the polar organic solvent to the solvent in the liquid A is not particularly limited as long as it satisfies the requirements that the above-mentioned core fine particles are present therein without being dissolved and the coating layer components are dissolved therein, and it varies depending on the solvent or the core fine particles to be used, the type of coating layer component or the like. However, it is preferably 30 % by volume or more, more preferably 60 to 90% by volume. Further, the ratio of the polar organic solvent to the solvent in the liquid C is not particularly limited as long as it allows the above-mentioned core fine particles to be coated with the coating layer components dissolved therein, however, it is preferably 50% by volume or less, more preferably 30 to 50% by volume.

The step of preparing the liquid A may be a step of preparing the liquid A by adding the above-mentioned polar organic solvent, the above-mentioned core fine particles and the above-mentioned coating layer component, or the above-mentioned polar organic solvent, the above-mentioned core fine particles, the above-mentioned coating layer component and the above-mentioned solvent other than a polar organic solvent in any order as long as the above-mentioned core fine particles are not dissolved. Preferably, a step of preparing the liquid A by preparing a liquid (liquid D) containing a polar organic solvent in which the above-mentioned core fine particles are dispersed, preparing a liquid (liquid E) in which a coating layer component is dissolved in a solvent containing a polar organic solvent that is the same as or different from the polar organic solvent in the liquid D and mixing the liquid D and the liquid E can be exemplified. The mixing of the liquid D and the liquid E is preferably performed gradually. In the step of preparing the liquid A by mixing the liquid D and the liquid E, in order to adjust the ratio of the polar organic solvent in the liquid A, it is only necessary to adjust the amount of the liquid D and the liquid E and the ratios of the polar organic solvent in the respective liquids. The mixing of the liquid D and the liquid E may be carried out in another in-line mixing means connected from the inlet of the above-mentioned in-line mixing means via a flow path or in a storage chamber or a storage tank equipped with a mixing means. As a device for coated fine particles in the case where it is connected with another in-line mixing means connected from the inlet of the above-mentioned in-line mixing means via a flow path, a device for coated fine particles which is equipped with a first in-line mixing means and a second in-line mixing means both of which have two inlets and one outlet and in which the outlet of the first in-line mixing means and one of the inlets of the second in-line mixing means is connected can be exemplified. The difference of the ratios of the polar organic solvent to the solvent in the liquid D and in the liquid E is preferably set to 20% by volume or less, more preferably to 0% by volume. Further, the liquid D and the liquid E may be prepared by separate in-line mixing means, respectively.

Further, in the liquid C, it is preferred that the ratio of the polar organic solvent is further reduced by adding a solvent (liquid F) other than the polar organic solvent, and/or selectively removing the polar organic solvent by, for example, distillation by evaporation, semipermeable membrane separation, fractional distillation or the like. The mixing of the liquid C and the liquid F may be carried out in another in-line mixing means connected from the outlet of the above-mentioned in-line mixing means via a flow path or in a storage chamber or a storage tank equipped with a mixing means.

The combination of core fine particles with a coating layer component in the present invention is not particularly limited, however, a combination of the core fine particles which are fine particles containing as a constituent component a complex of a drug and liposome with the coating layer component which is a lipid and/or a surfactant is preferred. Coated fine particles in which the core fine particles are fine particles containing as a constituent component liposome or a complex of a drug and liposome, the coating layer component is a lipid and/or a surfactant and the coating layer is a lipid membrane is classified into liposome in a narrow sense based on its structure. Coated fine particles in which the core fine particles is other than fine particles containing as a constituent component liposome or a complex of a drug and liposome, the coating layer component is a lipid and/or a surfactant and the coating layer is a lipid membrane is classified into liposome in a wide sense. In the present invention, it is more preferred that the coated fine particles are liposome in a narrow sense.

The ratio of the core fine particles to be used in the method of producing coated fine particles of the present invention to the liquid A and the liquid C is not particularly limited as long as it allows the core fine particles to be coated with the coating layer component, however, it is preferably 1 $\mu$g/mL to 1 g/mL, more preferably 0.1 to 500 mg/mL. Further, the ratio of the coating layer component (such as a lipid) to be used to the liquid A and the liquid C is not particularly limited as long as it allows the core fine particles to be coated, however, it is preferably 1 $\mu$g/mL to 1 g/mL, more preferably 0.1 to 400 mg/mL. The ratio of the coating layer component to the core fine particles is preferably in the range of 1:0.1 to 1:1000, more preferably 1:1 to 1:10 in terms of a weight ratio.

Further, as for the size of the coated fine particles that can be produced by the method of producing coated fine particles of the present invention, an average particles diameter is preferably 300 nm or less, more preferably 200 nm or less. Specifically, for example, an injectable size is preferred.

As a preferred method of producing coated fine particles of the present invention, a method of producing coated fine particles coated with a lipid membrane will be specifically described below as an example. Incidentally, other coated fine particles of the present invention can also be produced by a similar method regardless of the type of core fine particles to be used or the type of coating layer component to be used.

> (Step 1) The core fine particles are dispersed (suspended) in a liquid containing a polar organic solvent, preferably in an aqueous solution containing a polar organic solvent, more preferably in an aqueous solution containing an alcohol such as ethanol.
> (Step 2) A coating layer component constituting a lipid membrane (for example, a lipid which will be a lipid membrane and/or a surfactant) is dissolved in a liquid containing a polar organic solvent (preferably in an aqueous solution containing a polar organic solvent which is the same as or different from the aqueous solution containing a polar organic solvent in the step 1, more preferably in the same aqueous solution containing a polar organic solvent).
> (Step 3) The liquid obtained in the step 1 and the liquid obtained in the step 2 are mixed.
> (Step 4) Subsequently, the liquid mixture obtained in the step 3 is flowed from one of the inlets of an in-line mixing means of a device for producing coated fine particles, and a liquid which is miscible with the liquid mixture obtained in the step 3 and does not contain a polar organic solvent or contains a polar organic solvent in a ratio lower than that in the liquid mixture obtained in the step 3 (preferably water) is flowed from the remaining one inlet. The liquids are mixed, and coated fine particles in which the core fine particles is coated with a lipid membrane is obtained in the form of a suspension. Further, after the production of the coated fine particles is completed in the step 4, it is preferred that the ratio of the polar organic solvent is reduced by, for example, further mixing a liquid containing water or the like.

Hereinafter, the present invention will be described in more detail using drawings. However, the production method of the present invention is not limited to those illustrated in the drawings.

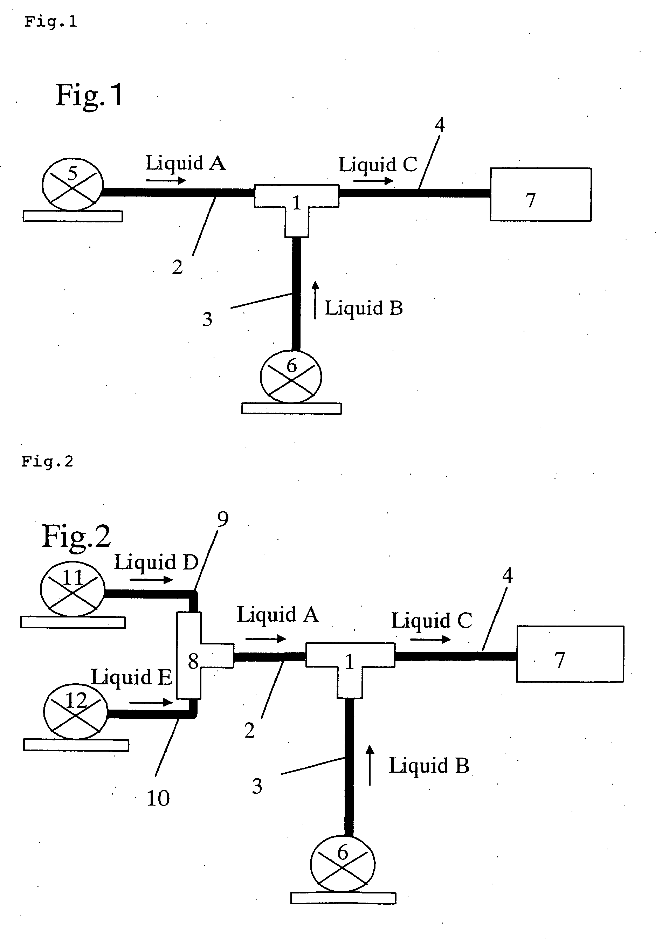

Fig. 1 shows a basic device for producing coated fine particles to be used in the present invention, wherein the device for producing coated fine particles is equipped with an in-line mixing means (1) having two inlets and one outlet, and provided with flow paths (2) and (3) to the inlets of (1), a flow path (4) at the outlet of (1), pumps (5) and (6) via (2) and (3) respectively, and a liquid tank (7) via (4). The above-mentioned liquid A flows in one of the inlets of (1) from (5) through (2), the above-mentioned liquid B flows in the other inlet of (1) from (6) through (3), and the liquid A and the liquid B are mixed in (1). By mixing the liquid A and the liquid B, core fine particles are coated with a coating layer, to form the liquid C in which the resulting coated fine particles are dispersed. The above-mentioned liquid C is flowed to the liquid tank (7) from the outlet of (1) through the flow path (4) and stored in the tank.

Fig. 2 shows an application example of the device for producing coated fine particles in the case where the above-mentioned liquid A is prepared with the above-mentioned liquid D and the above-mentioned liquid E using an in-line mixing means, wherein the device for producing coated fine particles is equipped with an in-line mixing means (8) having two inlets and one outlet instead of the pump (5) in Fig. 1, and the outlet of (8) is connected to (2), flow paths (9) and (10) are provided at the inlets of (8), and pumps (11) and (12) are provided via (9) and (10), respectively.

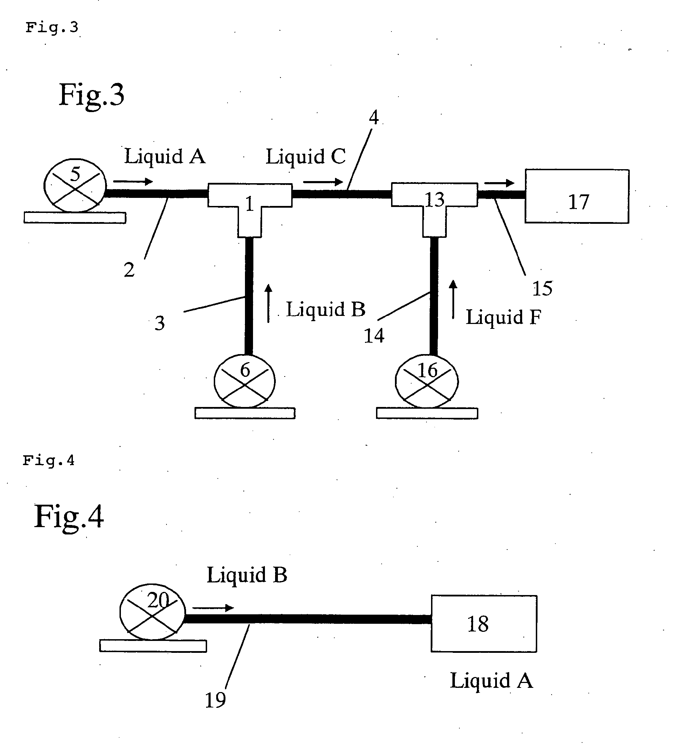

Fig. 3 shows an application example of the device for producing coated fine particles in the case where the basic device for producing coated fine particles of Fig. 1 is further equipped with an in-line mixing means for mixing the above-mentioned liquid C and the above-mentioned liquid F, wherein the device for producing coated fine particles is equipped with an in-line mixing means (13) having two inlets and one outlet instead of the liquid tank (7) in Fig. 1, and one of the inlets of (13) is connected to (4) and flow paths (14) and (15) are provided at the other inlet and the outlet of (13), respectively, and a pump (16) and a liquid tank (17) are provided via (14) and (15), respectively.

On the other hand, Fig. 4 shows a device for producing coated fine particles in the prior art (see International Publication WO 02/28367), wherein the device for producing coated fine particles is provided with a liquid tank (18) and a flow path (19) connected thereto and a pump (20) via (19). The above-mentioned liquid A is flowed into (18), and the above-mentioned liquid B is flowed into (20) and added to the liquid A in (18) from (20) through (19).

Examples of the in-line mixing means in the present invention include a T-tube, Y-tube, a three-way joint, a three-way stopcock, an in-line mixer (such as a static mixer), an in-line mixer assembly and the like, and it is preferred that each of them is connected to or incorporates a static mixer. The flow path may be any flow path such as a metal pipe or a plastic tube. Examples of the pump include a gear pump, a tube pump, a syringe pump, a vacuum pump, a pressurizing pump, a plunger pump and the like, and the pump may also have a function as a flow path. Further, a storage chamber or a storage tank may be provided inside the device for producing coated fine particles to be used in the present invention or outside the device through a flow path, each of which may have a mixing means. Here, free fall utilizing the vertical interval resulting from installation of a storage chamber or a storage tank at a high position is also included in one embodiment of the pump.

In the production method of the present invention, the mixing means equipped in the storage chamber or the storage tank provided inside the device for producing coated fine particles of the present invention or outside the device through a flow path is not particularly limited and examples thereof include a static mixer, a propeller mixer, a rotor/'stator mixer, a turbine mixer, a saw blade, a colloid mill, a high pressure homogenizer and the like, and preferred examples include a static mixer, a propeller mixer, a rotor/stator mixer and a turbine mixer.

In any of the devices for producing coated fine particles of Figs. 1 to 3, core fine particles are coated while a liquid mixture of the liquid A and the liquid B is flowing in the flow path (4) from the in-line mixing means (1), and a suspension containing desired coated fine particles can be obtained continuously by exchanging the liquid tank (7) or (17) while stopping the respective pumps at a predetermined time during stopping or operating the pumps. Further, even if the respective pumps are stopped at a predetermined time, the respective liquids to be supplied are exchanged and the respective pumps are restarted, if the liquids having the same composition are used, it is possible to easily obtain a suspension containing the same coated fine particles continuously. Further, regardless of the size of the device for producing coated fine particles, by exchanging the liquid tank (7) or (17), or the respective liquids to be supplied, it is possible to produce a given amount of suspension containing coated fine particles, therefore, it is also possible to produce an industrially required amount of coated fine particles. That is, by the method of producing coated fine particles of the present invention, coating of core fine particles can be continuously carried out, and mass production of coated fine particles becomes possible. On the other hand, with the device for producing coated fine particles of Fig. 4, core fine particles are coated in the liquid tank (18), and a suspension of desired coated fine particles can be obtained in the liquid tank (8) only after a predetermined amount of the liquid B is supplied. In addition, in order to produce an industrially required amount of coated fine particles, an extremely large device for producing coated fine particles is needed.

Further, in the case where a small-scale device for producing coated fine particles is demanded, one obtained by downsizing the above-mentioned device for producing coated fine particles equipped with an in-line mixing means may be used. At this time, the pump may be a pump utilizing free fall or a pump pushed by the human hand (such as a syringe, a piston or a spuit). By using such a small-scale device for producing coated fine particles, it is also possible to produce coated fine particles just before use.

The coated fine particles of the present invention can be used, for example, as a preparation intended for stabilization of a drug in a living body component such as a blood component, gastrointestinal juice or the like, reduction of side effects, increase in the accumulation property of a drug in a target organ such as a tumor, improvement in absorption of a drug orally or via mucous membrane or the like. The coated fine particles of the present invention is preferably coated fine particles rigidly incorporating a drug capable of encapsulating the drug for a long period of time in a living body component for the above-mentioned purposes.

In the case where the coated fine particles of the present invention is used as a preparation, it is also possible to use the suspension of the coated fine particles prepared by the method described above as it is in the form of, for example, an injection or the like. However, it can also be used after removing the solvent from the suspension by, for example, filtration, centrifugation or the like, or after lyophilizing the suspension or the suspension supplemented with an excipient such as mannitol, lactose, trehalose, maltose or glycine.

In the case of an injection, it is preferred that an injection is prepared by mixing, for example, water, an acid, an alkali, any of various buffers, a physiological saline solution, an amino acid infusion or the like with the suspension of the above-mentioned coated fine particles or the above-mentioned coated fine particles obtained by removing the solvent or lyophilization. Further, it is possible to prepare an injection by adding an antioxidant such as citric acid, ascorbic acid, cysteine or EDTA, an isotonic agent such as glycerol, glucose or sodium chloride or the like. Further, it can also be cryopreserved by adding a cryopreservation agent such as glycerol.

Further, the coated fine particles of the present invention may be formulated into an oral preparation such as a capsule, a tablet or a granule by granulation along with an appropriate excipient or the like, drying or the like.

Hereinafter, the present invention will be described specifically based on Examples. However, the present invention is not limited to these Examples.

Example 1

Using the following device for producing coated fine particles, liquid A, liquid B and liquid F, the liquid A and the liquid B were flowed, respectively such that the concentration of ethanol in the liquid C after mixing the liquid A at 10 mL/h and the liquid B at 7.5 mL/h was about 40% by volume, and the liquid F was flowed by adjusting the concentration of ethanol was about 10% by volume after mixing. The supernatant was removed from the obtained suspension of coated fine particles by ultracentrifugation (110,000 x g at 25°C for 1 hour), the residue was resuspended by adding a 50 mmol/L aqueous solution of potassium dihydrogen phosphate, whereby a preparation was obtained.

Device for producing a coated fine particle:

A device for producing coated fine particles shown in Fig. 3 was used. T-shaped joints (Terufusion Three-Way Stopcock Type R, manufactured by Terumo) were used for (1) and (13), syringe pumps (Terufusion Syringe Pump STC-525, manufactured by Terumo) were used for (5), (6) and (15).

Liquid A:

To 3.00 g of egg yolk lecithin (manufactured by QP Corporation) and 1.20 g of PEG-DSPE (manufactured by Avanti Polar Lipids, hereinafter the same one was used), 20 mL of ethanol was added at room temperature to dissolve the substances, and ethanol was distilled off, and the residue was dried under reduced pressure. Then, 100 mL of water was added thereto, and the mixture was stirred by shaking with a vortex mixer. The obtained suspension was passed, at room temperature, through a polycarbonate membrane filter of 0.20 $\mu$m pore size for 20 times and then through a polycarbonate membrane filter of 0.05 $\mu$m pore size for 10 times. Aside from this, to 3.5 mL of a 1.4 mg/mL aqueous solution of G-CSF (manufactured by Kyowa Hakko, Nartograstim, a genetically engineered human G-CSF mutant), 1.4 mL of 7 mg/mL sodium dextran sulfate (manufactured by Merck) was added. The obtained liquid (4.2 mL) and 0.2 mL of the filtered suspension of egg yolk lecithin and PEG-DSPE were mixed, and hydrochloric acid (Kanto Chemical Co. Ltd.) was added thereto to adjust the pH to 4, whereby a suspension of core fine particles was obtained. To 500 $\mu$L of the obtained suspension of core fine particles, 780 $\mu$L of ethanol was added, and 53 $\mu$L of ethanol containing 30 mg/mL egg yolk phosphatidylcholine and 12 mg/mL PEG-DSPE was added thereto.

Liquid B:

Distilled water

Liquid F:

A 50 mmol/L aqueous solution of potassium dihydrogen phosphate

Example 2

Using the same device for producing coated fine particles, liquid B and liquid F as in Example 1 and the following liquid A, the liquid A and the liquid B were flowed, respectively such that the concentration of ethanol in the liquid C after mixing the liquid A at 8 mL/h and the liquid B at 4.2 mL/h was about 40% by volume, and the liquid F was flowed by adjusting the concentration of ethanol was about 10% by volume after mixing. By using the obtained suspension of coated fine particles, ultracentrifugation and resuspension were carried out in the same manner as in Example 1, whereby a preparation was obtained.

Liquid A:

To 500 μL of a suspension of core fine particles prepared in the same manner as in Example 1, 666 μL of ethanol was added, and 167 μL of ethanol containing 30 mg/mL egg yolk phosphatidylcholine and 12 mg/mL PEG-DSPE was added thereto.

<Comparative Example 1>

Using the following device for producing coated fine particles, liquid A and liquid B, the liquid A was flowed into the following (18), the liquid B was flowed into (20), and 7 mL of the liquid B was added to the liquid A through (19) so as to make the concentration of ethanol 10% by volume. By using the obtained suspension of coated fine particles, ultracentrifugation and resuspension were carried out in the same manner as in Example 1, whereby a preparation was obtained.

Device for producing a coated fine particle:

A device for producing coated fine particles shown in Fig. 4 was used. An Erlenmeyer flask in which a magnetic stirrer was placed was used for (18), and a syringe pump (Terufusion Syringe Pump STC-525, manufactured by Terumo) was used for (20).

Liquid A:

To 500 μL of a suspension of core fine particles prepared in the same manner as in Example 1, 780 μL of ethanol was added, and 53 μL of ethanol containing 30 mg/mL egg yolk phosphatidylcholine and 12 mg/mL PEG-DSPE was added thereto.

Liquid B:

Distilled water

<Test Example 1>

For the respective preparations obtained in Examples 1 to 2, and Comparative Example 1, the average particles diameter of each coated fine particles was measured with a dynamic light scattering (DLS) measurement device (A model ELS-800, manufactured by Otsuka Electronics, hereinafter the same one was used). The results are shown in Table 1.
[Table 1]

|  | Average particles diameter (nm) |
| --- | --- |
| Example 1 | 194 |
| Example 2 | 203 |
| Comparative Example 1 | 165 |

<Test Example 2>

For the respective preparations obtained in Examples 1 to 2 and Comparative Example 1, the encapsulation ratio of G-CSF in each coated fine particles was obtained as follows.
Each preparation was subjected to gel filtration chromatography (a column of φ 10 mm x 20 cm was packed with a molecular size exclusion polymer (Sepharose CL-4B), and a phosphate buffered saline solution (PBS) was used as a mobile phase), and separated into coated fine particles fraction and a free G-CSF fraction, respectively. To 20 μL of the respective fractions, 2 μL of a borate buffer at pH 9 containing 10 w/v% sodium lauryl sulfate, 78 μL of a borate buffer at pH 9 and 100 μL of 2-propanol were added and the mixture was stirred to completely destroy the coated fine particles. Then, G-CSF was determined by high performance liquid chromatography (under the following conditions), and the encapsulation ratio of G-CSF in the coated fine particles was calculated using the following equation (1). The results are shown in Table 2.

Column: YMC-Pack C8, φ 4.6 mm x 15 cm

Mobile phase: liquid I (a liquid mixture of a phosphate buffer (pH 7, 10 mmol/L) and 2-propanol (75:25)) + liquid II (2-propanol)

The ratio of liquid II was linearly increased from 0 to 86.7 % by volume from 0 to 30 minutes after the initiation of the analysis, and was set to 86.7 % by volume from 30 to 40 minutes.

Detection: excitation wavelength of 280 nm and a fluorescence wavelength of 340 nm

[Equation 1]

$$\text{Encapsulation ratio (\%)} = A_1 / (A_1 + B_1) \times 100 \qquad (1)$$

$A_1$: Amount of G-CSF (μg) in coated fine particles fraction = concentration of G-CSF (μg/mL) in coated fine particles fraction x volume of coated fine particles fraction (mL)

$B_1$: Amount of G-CSF (μg) in free G-CSF fraction = concentration of G-CSF (μg/mL) in free G-CSF fraction x volume of free G-CSF fraction (mL)

[Table 2]

| Sample | Encapsulation ratio (%) |
| --- | --- |
| Example 1 | 93 |
| Example 2 | 98 |
| Comparative Example 1 | 74 |

As shown in Table 1, the coated fine particles in the respective preparations obtained in Examples 1 to 2 and Comparative Example 1 has a similar average particles diameter, respectively. On the other hand, as shown in Table 2, as for the preparations obtained in Examples 1 and 2, the encapsulation ratio of G-CSF in the coated fine particles was 90% or more, and as for the preparation obtained in Comparative Example 1, it was about 70%. That is, by the method of producing coated fine particles of the present invention, although it is a continuous and simple production method, coated fine particles with the same size as that in the conventional method can be produced, and further, it was also possible to produce efficient coated fine particles having a high drug encapsulation ratio.

Example 3

Using the following device for producing coated fine particles, liquid A and liquid B, the liquid A and the liquid B were flowed, respectively such that the concentration of ethanol in the liquid C after mixing the liquid A at 5.2 mL/h and the liquid B at 11.1 mL/h was about 20% by volume. Into (7), 18.8 mL of distilled water was flowed in advance to allow the obtained suspension of coated fine particles to be added dropwise thereto. The syringe pump was operated, and after 23 minutes, the syringe pump was stopped. (7) was covered and tumbled mixing was carried out, and then ultracentrifugation (110,000 x g at 25°C for 1 hour) of the obtained liquid mixture was carried out. To a precipitate after the ultracentrifugation, a phosphate buffered saline solution (PBS) was added such that the concentration of the total lipids after dilution was 30 mg/mL to resuspend the precipitate, whereby a preparation was obtained.

Device for producing a coated fine particle:

A device for producing coated fine particles shown in Fig. 1 was used. A three-way joint for HPLC plumbing (manufactured by Shimadzu Corporation) and a 2-cm static mixer [a fluorine plastic tube of 20 mm in length and 1.5 mm in inner diameter packed with 2 mg of quartz wool for gas chromatography (manufactured by Shimadzu Corporation)] were used for (1), and syringe pumps (manufactured by Nikkiso Co. Ltd.) equipped with a 20-mL syringe (manufactured by Terumo) were used for (5) and (6).

Liquid A:

To 30 mg of dextran fluorescein anionic (FD) (manufactured by Molecular Probes, hereinafter, the same one was used), 180 mg of DOTAP (manufactured by Avanti Polar Lipids, hereinafter the same one was used) and 72 mg of PEG-DSPE, 9 mL of distilled water was added, and the mixture was stirred by shaking with a vortex mixer. The obtained suspension was passed, at room temperature, through a polycarbonate membrane filter of 0.4 $\mu$m pore size for 10 times and then through a polycarbonate membrane filter of 0.1 $\mu$m pore size for 10 times, whereby a suspension of core fine particles was obtained. 750 $\mu$L of the obtained suspension of core fine particles was mixed with 1 mL of ethanol, which was mixed with 250 $\mu$L of a solution obtained by adding 2 mL of ethanol to 480 mg of EPC and 100 mg of PEG-DSPE and stirring the mixture.

Liquid B:

Distilled water

Example 4

Using the same device for producing coated fine particles, liquid A and liquid B as in Example 3, the liquid A and the liquid B were flowed, respectively such that the concentration of ethanol in the liquid C after mixing the liquid A at 5.2 mL/h and the liquid B at 5.6 mL/h was about 30% by volume. Into (7), 20.9 mL of distilled water was flowed in advance to allow the obtained suspension of coated fine particles to be added dropwise thereto. The syringe pump was operated, and after 23 minutes, the syringe pump was stopped. Then, mixing, ultracentrifugation and resuspension were carried out in the same manner as in Example 3, whereby a preparation was obtained.

Example 5

Using the same device for producing coated fine particles, liquid A and liquid B as in Example 3, the liquid A and the liquid B were flowed, respectively such that the concentration of ethanol in the liquid C after mixing the liquid A at 5.2 mL/h and the liquid B at 2.9 mL/h was about 40% by volume. Into (7), 21.9 mL of distilled water was flowed in advance to allow the obtained suspension of coated fine particles to be added dropwise thereto. The syringe pump was operated, and after 23 minutes, the syringe pump was stopped. Then, mixing, ultracentrifugation and resuspension were carried out in the same manner as in Example 3, whereby a preparation was obtained.

Example 6

Using the same device for producing coated fine particles, liquid A and liquid B as in Example 3, the liquid A and the liquid B were flowed, respectively such that the concentration of ethanol in the liquid C after mixing the liquid A at 5.2 mL/h and the liquid B at 0.7 mL/h was about 55% by volume. Into (7), 22.7 mL of distilled water was flowed in advance to allow the obtained suspension of coated fine particles to be added dropwise thereto. The syringe pump was operated, and after 23 minutes, the syringe pump was stopped. Then, mixing, ultracentrifugation and resuspension were carried out in the same manner as in Example 3, whereby a preparation was obtained.

Example 7

Using the same device for producing coated fine particles, liquid A and liquid B as in Example 3, the liquid A and the liquid B were flowed, respectively such that the concentration of ethanol in the liquid C after mixing the liquid A at 26.0 mL/h and the liquid B at 28.0 mL/h was about 30% by volume. Into (7), 20.9 mL of distilled water was flowed in advance to allow the obtained suspension of coated fine particles to be added dropwise thereto. The syringe pump was operated, and after 4.6 minutes, the syringe pump was stopped. Then, mixing, ultracentrifugation and resuspension were carried out in the same manner as in Example 3, whereby a preparation was obtained.

Example 8

Using the same device for producing coated fine particles, liquid A and liquid B as in Example 3, the liquid A and the liquid B were flowed, respectively such that the concentration of ethanol in the liquid C after mixing the liquid A at 1.0 mL/h and the liquid B at 1.1 mL/h was about 30% by volume. Into (7), 20.9 mL of distilled water was flowed in advance to allow the obtained suspension of coated fine particles to be added dropwise thereto. The syringe pump was operated, and after 115 minutes, the syringe pump was stopped. Then, mixing, ultracentrifugation and resuspension were carried out in the same manner as in Example 3, whereby a preparation was obtained.

Example 9

Using a device for producing coated fine particles which is the same device for producing coated fine particles as in Example 3 except that the mixer was removed, and the same liquid A and liquid B as in Example 3, the liquid A and the liquid B were flowed, respectively such that the concentration of ethanol in the liquid C after mixing the liquid A at 5.2 mL/h and the liquid B at 5.6 mL/h was about 30% by volume. Into (7), 20.9 mL of distilled water was flowed in advance to allow the obtained suspension of coated fine particles to be added dropwise thereto. The syringe pump was operated, and after 23 minutes, the syringe pump was stopped. Then, mixing, ultracentrifugation and resuspension were carried out in the same manner as in Example 3, whereby a preparation was obtained.

Example 10

Using a device for producing coated fine particles which is the same device for producing coated fine particles as in Example 3 except that the 2-cm static mixer was changed to a 0.4-cm static mixer [a fluorine plastic tube of 4 mm in length and 1.5 mm in inner diameter packed with 0.4 mg of quartz wool for gas chromatography (manufactured by Shimadzu Corporation)], and the same liquid A and liquid B as in Example 3, a suspension of coated fine particles was produced in the same manner as in Example 9, and then, mixing, ultracentrifugation and resuspension were carried out in the same manner as in Example 3, whereby a preparation was obtained.

Example 11

Using a device for producing coated fine particles which is the same device for producing coated fine particles as in Example 3 except that the 2-cm static mixer was changed to a 1-cm static mixer [a fluorine plastic tube of 10 mm in length and 1.5 mm in inner diameter packed with 1 mg of quartz wool for gas chromatography (manufactured by Shimadzu Corporation)], and the same liquid A and liquid B as in Example 3, a suspension of coated fine particles was produced in the same manner as in Example 9, and then, mixing, ultracentrifugation and resuspension were carried out in the same manner as in Example 3, whereby a preparation was obtained.

Example 12

Using a device for producing coated fine particles which is the same device for producing coated fine particles as in Example 3 except that five 2-cm static mixers were serially connected to one another (10 cm in total), and the same liquid A and liquid B as in Example 3, a suspension of coated fine particles was produced in the same manner as in Example 9, and then, mixing, ultracentrifugation and resuspension were carried out in the same manner as in Example 3, whereby a preparation was obtained.

<Comparative Example 2>

Using the following device for producing coated fine particles, liquid A and liquid B, the liquid A is flowed into the following (18), the liquid B is flowed into (20), and 23 mL of the liquid B is added at 1 mL/min to the liquid A through (19). Then, ultracentrifugation (110,000 x g at 25°C for 1 hour) of the obtained suspension of coated fine particles was carried out. A precipitate after the ultracentrifugation was diluted with PBS to adjust the concentration of the total lipids after dilution to be 30 mg/mL, whereby a preparation was obtained.

Device for producing a coated fine particle:

A device for producing coated fine particles shown in Fig. 4 was used. A syringe pump (Terufusion Syringe Pump STC-525, manufactured by Terumo) was used for (20), and a glass vessel with a capacity of about 30 mL was used for (18). In the glass vessel, a rotor was placed, and stirring was carried out with a stirrer.

Liquid A:

To 30 mg of FD, 180 mg of DOTAP and 72 mg of PEG-DSPE, 9 mL of distilled water was added, and the mixture was stirred by shaking with a vortex mixer. The obtained suspension was passed, at room temperature, through a polycarbonate membrane filter of 0.4 $\mu$m pore size for 10 times and then through a polycarbonate membrane filter of 0.1 $\mu$m pore size for 10 times. The obtained suspension (750 $\mu$L) was flowed into a glass vessel with a capacity of about 30 mL, then a rotor was placed in the vessel and 1 mL of ethanol was mixed with the suspension while the mixture was stirred with a stirrer, whereby a suspension of core fine particles was obtained. To the obtained suspension of core fine particles, 250 $\mu$L of a solution obtained by adding 5 mL of ethanol to 1200 mg of EPC and 250 mg of PEG-DSPE and stirring the mixture was added and mixed.

Liquid B:

Distilled water

<Comparative Example 3>

Using the following device for producing coated fine particles, liquid A and liquid B, the liquid A was added dropwise to the liquid B. After the dropwise addition, mixing, ultracentrifugation and resuspension were carried out in the same manner as in Example 3, whereby a preparation was obtained. Device for producing a coated fine particle: A device for producing coated fine particles, which is a device for producing coated fine particles shown in Fig. 1 in which a variable pipette (manufactured by Eppendorf Inc.) was used for (5), and (1), (3) and (6) were removed, and the liquid B was flowed into the liquid tank (7), was used.

Liquid A:

To 30 mg of FD, 180 mg of DOTAP and 72 mg of PEG-DSPE, 9 mL of distilled water was added, and the mixture was stirred by shaking with a vortex mixer. The obtained suspension was passed, at room temperature, through a polycarbonate membrane filter of 0.4 $\mu$m pore size for 10 times and then through a polycarbonate membrane filter of 0.1 $\mu$m pore size for 10 times, whereby a suspension of core fine particles was obtained. The obtained suspension (750 $\mu$L) of core fine particles was mixed with 1 mL of ethanol, which was mixed with 250 $\mu$L of a solution obtained by adding 2 mL of ethanol to 480 mg of EPC and 100 mg of PEG-DSPE and stirring the mixture.

Liquid B:

23.0 mL of distilled water

<Test Example 3>

For the respective preparations obtained in Examples 3 to 12 and Comparative Examples 2 to 3, the average particles diameter of coated fine particles was measured with a DLS measurement device. The results are shown in Table 3.
[Table 3]

|  | Average particles diameter (nm) |
| --- | --- |
| Example 3 | 200 |
| Example 4 | 176 |
| Example 5 | 131 |
| Example 6 | 162 |
| Example 7 | 183 |
| Example 8 | 147 |
| Example 9 | 146 |
| Example 10 | 179 |
| Example 11 | 169 |
| Example 12 | 171 |

(continued)

| | Average particles diameter (nm) |
|---|---|
| Comparative Example 2 | 183 |
| Comparative Example 3 | 248 |

<Test Example 4>

For the respective preparations obtained in Examples 3 to 12 and Comparative Example 2, the encapsulation ratio of FD in coated fine particles was obtained as follows.

Each preparation (30 $\mu$L) was taken, and 2970 $\mu$L of purified water was added thereto. Then, the mixture was stirred and ultracentrifuged, whereby a supernatant was obtained. Each preparation and each supernatant mentioned above were diluted to 1000-fold. To 50 $\mu$L of each diluted solution, 50 $\mu$L of 10 w/v% Triton X-100 and 400 $\mu$L of PBS were respectively added, and the mixture was stirred with a vortex mixer. A 100 $\mu$L portion of each mixture was placed in a 96-well microplate, and fluorescence intensity at an excitation wavelength of 485 nm and a fluorescence wavelength of 530 nm was measured using a fluorescence plate reader (manufactured by WALLAC, ARVOsx-4). On the other hand, the fluorescence intensities of the respective aqueous solutions of FD at 1, 0.5 and 0.25 $\mu$g/mL were measured, and a calibration curve was obtained. From the calibration curve, the concentration of FD in each preparation and the concentration of FD in each supernatant after ultracentrifugation were obtained, and the encapsulation ratio of FD in each coated fine particles was calculated using the following equation (2). The results are shown in Table 4.

$$[\text{Equation 2}]$$

$$\text{Encapsulation ratio (\%)} = (A_2 - B_2 \times 100) / A_2 \times 100 \quad (2)$$

$A_2$: Concentration of FD ($\mu$g/mL) in preparation = concentration of FD ($\mu$g/mL) in test liquid prepared from preparation x 1000 x 10

$B_2$: Concentration of FD ($\mu$g/mL) in supernatant after ultracentrifugation = concentration of FD ($\mu$g/mL) in test liquid prepared from supernatant after ultracentrifugation x 1000 x 10

[Table 4]

| | Encapsulation ratio (%) |
|---|---|
| Example 3 | 96.7 |
| Example 4 | 96.5 |
| Example 5 | 96.4 |
| Example 6 | 97.4 |
| Example 7 | 96.2 |
| Example 8 | 95.5 |
| Example 9 | 94.8 |
| Example 10 | 96.2 |
| Example 11 | 97.2 |
| Example 12 | 96.7 |
| Comparative Example 2 | 94.8 |

<Test Example 5>

For the respective preparations obtained in Examples 3 to 12 and Comparative Examples 2 to 3, the recovery rates of FD and EPC to the charged amounts were obtained as follows.

Each preparation was diluted to 1000-fold, and to 50 $\mu$L of each diluted solution, 50 $\mu$L of 10 w/v% Triton X-100 and

400 μL of PBS were added, and the mixture was stirred with a vortex mixer. A 100 μL portion of each mixture was placed in a 96-well microplate, and fluorescence intensity at an excitation wavelength of 485 nm and a fluorescence wavelength of 530 nm was measured using a fluorescence plate reader (manufactured by WALLAC, ARVOsx-4). On the other hand, the fluorescence intensities of the respective aqueous solutions of FD at 1, 0.5 and 0.25 μg/mL were measured, and a calibration curve was obtained. From the calibration curve, the concentration of FD in each preparation was obtained. Further, the concentration of EPC in each preparation was obtained by measurement using Phospholipid C-test Wako (manufactured by Wako Pure Chemical Industries Ltd.). The recovery rate of FD and the recovery rate of EPC in each preparation were calculated using the following equation (3). The results are shown in Table 5.

$$[\text{Equation 3}]$$

$$\text{Recovery rate of FD (\%) in preparation} = A_3 / B_3 \times 100$$

$$\text{Recovery rate of EPC (\%) in preparation} = C_3 / D_3 \times 100 \quad (3)$$

$A_3$: Concentration of FD (μg/mL) in preparation = concentration of FD (μg/mL) in test liquid prepared from preparation x 1000 x 10

$B_3$: Theoretical concentration of FD (μg/mL) in preparation when the recovery rate is assumed to be 100%

$C_3$: Concentration of EPC (mg/mL) in preparation

$D_3$: Theoretical concentration of EPC (mg/mL) in preparation when the recovery rate is assumed to be 100%

[Table 5]

|  | Recovery rate of FD (%) | Recovery rate of EPC (%) |
| --- | --- | --- |
| Example 3 | 45.6 | 43.2 |
| Example 4 | 62.9 | 62.6 |
| Example 5 | 64.6 | 55.8 |
| Example 6 | 56.5 | 62.8 |
| Example 7 | 61.8 | 64.2 |
| Example 8 | 58.6 | 54.6 |
| Example 9 | 58.5 | 53.8 |
| Example 10 | 44.9 | 51.3 |
| Example 11 | 41.9 | 47.7 |
| Example 12 | 47.3 | 59.9 |
| Comparative Example 2 | 58.7 | 64.7 |
| Comparative Example 3 | 26.3 | 20.2 |

<Test Example 6>

For the respective preparations obtained in Examples 3 to 12 and Comparative Example 2, the stability in fetal bovine serum (FBS) was examined.

To 30 μL of each preparation, 2970 μL of FBS was added and mixed. A 500 μL portion each was taken right after the mixing and after the mixture was allowed to stand at 37°C for 3 hours, which was subjected to gel filtration chromatography (gel permeation chromatography (GPC)), and the fractions (10 fractions, 100 drops in each fraction) were collected. Each fraction was stirred by shaking with a vortex mixer and used as a sample. For determining FD, to a 50 μL portion of each fraction, 50 μL of 10 w/v% Triton X-100 and 400 μL of PBS were added, and the mixture was stirred with a vortex mixer. A 100 μL portion of each mixture was placed in a 96-well microplate, and fluorescence intensity at an excitation wavelength of 485 nm and a fluorescence wavelength of 530 nm was measured using a fluorescence plate reader (manufactured by WALLAC, ARVOsx-4).

The recovery rates of FD after 0 hour and after 3 hours were calculated using the following equation (4). The results are shown in Table 6.

[Equation 4]

Recovery rate of FD (%) after 0 hour = $A_4$ / $B_4$ x 100

Recovery rate of FD (%) after 3 hours = $C_4$ / $D_4$ x 100   (4)

$A_4$ = $\Sigma${(fluorescence intensity of each fraction) $_{\text{coated fine particles fraction (after 0 hour)}}$ x (volume of each fraction) $_{\text{coated fine particles fraction (after 0 hour)}}$}

$B_4$ = $\Sigma${(fluorescence intensity of each fraction) $_{\text{total fractions (after 0 hour)}}$ x (volume of each fraction) $_{\text{total fractions (after 0 hour)}}$}

$C_4$ = $\Sigma${(fluorescence intensity of each fraction) $_{\text{coated fine particles fraction (after 3 hours)}}$ x (volume of each fraction) $_{\text{coated fine particles fraction (after 3 hours)}}$}

$D_4$ = $\Sigma${(fluorescence intensity of each fraction) $_{\text{total fractions (after 3 hours)}}$ x (volume of each fraction) $_{\text{total fractions (after 3 hours)}}$}

[Table 6]

| | Recovery rate (%) after 0 hour | Recovery rate (%) after 3 hours |
|---|---|---|
| Example 3 | 79.5 | 76.3 |
| Example 4 | 77.3 | 74.2 |
| Example 5 | 72.0 | 70.7 |
| Example 6 | 71.9 | 68.5 |
| Example 7 | 72.3 | 67.9 |
| Example 8 | 75.4 | 71.7 |
| Example 9 | 72.1 | 72.0 |
| Example 10 | 74.2 | 70.9 |
| Example 11 | 74.5 | 69.3 |
| Example 12 | 77.9 | 75.2 |
| Comparative Example 2 | 64.8 | 63.6 |

As shown in Table 3 and Table 4, the coated fine particles in the respective preparations obtained in Examples 3 to 12 and Comparative Examples 2 to 3 have a similar average particles diameter and encapsulation ratio, and coated fine particles with a similar quality in terms of their appearance were obtained. On the other hand, as shown in Table 5, the respective preparations obtained in Examples 3 to 12 and Comparative Example 2 have high recovery rates of FD and EPC and the preparation obtained in Comparative Example 3 has low recovery rates of FD and EPC. Further, as shown in Table 6, the preparations obtained in Examples 3 to 12 have a higher recovery rate of FD in PBS compared with that of the preparation obtained in Comparative Example 2, and have a good stability in PBS. That is, by the method of producing coated fine particles of the present invention, although it is a continuous and simple production method, coated fine particles having a similar size and drug encapsulation ratio to that in the conventional method can be produced, and further, it was also possible to produce coated fine particles in which a drug is incorporated efficiently and/or rigidly.

Industrial Applicability

According to the present invention, a continuous and simple industrial production method of coated fine particles in which core fine particles is coated with a coating layer is provided. Further, according to the present invention, a production method of coated fine particles in which a drug is efficiently and/or rigidly incorporated is provided.

**Claims**

1.  A method of producing coated fine particles in which core fine particles is coated with a coating layer, which comprises the steps of:

    preparing a liquid (liquid A) containing a polar organic solvent in which core fine particles are dispersed and a coating layer component constituting the coating layer is dissolved;
    preparing a liquid (liquid B) which is miscible with the liquid A and does not contain a polar organic solvent or contains a polar organic solvent in a ratio lower than that in the liquid A; and
    letting the liquid A flow from at least one inlet of a device for producing coated fine particles equipped with an in-line mixing means having two or more inlets and one or more outlet(s) and letting the liquid B flow from at least one remaining inlet to mix the liquids thereby coating the core fine particles with a coating layer.

2.  The production method according to claim 1, wherein the device for producing coated fine particles includes a pump, a flow path and the in-line mixing means.

3.  The production method according to claim 1, wherein the device for producing coated fine particles includes a manual pump, a flow path and the in-line mixing means.

4.  The production method according to any one of claims 1 to 3, wherein the coating layer component is one or more substance(s) selected from lipids, surfactants and polymers.

5.  The production method according to any one of claims 1 to 4, wherein the coating layer is a lipid membrane.

6.  The production method according to any one of claims 1 to 5, wherein the core fine particles are fine particles containing as a constituent component a drug, a lipid assembly, liposome, an emulsion fine particles, a polymer, a metal colloid or fine particles preparation.

7.  The production method according to any one of claims 1 to 5, wherein the core fine particles are fine particles containing as a constituent component a complex obtained by combining two or more of a drug, a lipid assembly, liposome, an emulsion fine particles, a polymer, a metal colloid or fine particles preparation.

8.  The production method according to any one of claims 1 to 5, wherein the core fine particles are fine particles containing as a constituent component a complex of a drug and liposome.

9.  The production method according to any one of claims 1 to 8, wherein the polar organic solvent is one or more member(s) selected from alcohols, glycols and polyalkylene glycols.

10. The production method according to any one of claims 1 to 8, wherein the polar organic solvent is ethanol.

11. Coated fine particles which can be produced by the production method according to any one of claims 1 to 10.

Fig.1

# Fig.1

Liquid A          Liquid C

5 —— Liquid A ——→ 1 —— Liquid C ——→ 7

2

3 ↑ Liquid B

6

Fig.2

# Fig.2

Liquid D

11 —— Liquid D ——→ 9

Liquid A          Liquid C

8 —— Liquid A ——→ 1 —— Liquid C ——→ 7

Liquid E

12 —— Liquid E ——→

10

2

3 ↑ Liquid B

6

Fig.3

# Fig.3

Liquid A    Liquid C    4

5    1    13    17

2

3    Liquid B    14    Liquid F    15

6    16

Fig.4

# Fig.4

Liquid B

20    18

19    Liquid A

<table>
<tr><td colspan="2" align="center">**INTERNATIONAL SEARCH REPORT**</td><td>International application No.<br>PCT/JP2005/005251</td></tr>
</table>

| A. CLASSIFICATION OF SUBJECT MATTER |
|---|
| Int.Cl⁷ B01J13/04, A61J3/07, A61K9/127, 9/14, 47/24, B01J19/00 |

According to International Patent Classification (IPC) or to both national classification and IPC

| B. FIELDS SEARCHED |
|---|

Minimum documentation searched (classification system followed by classification symbols)
Int.Cl⁷ B01J13/04, A61J3/07, A61K9/127, 9/14, 47/24, B01J19/00

Documentation searched other than minimum documentation to the extent that such documents are included in the fields searched
Jitsuyo Shinan Koho            1922-1996   Jitsuyo Shinan Toroku Koho   1996-2005
Kokai Jitsuyo Shinan Koho    1971-2005   Toroku Jitsuyo Shinan Koho    1994-2005

Electronic data base consulted during the international search (name of data base and, where practicable, search terms used)

| C. DOCUMENTS CONSIDERED TO BE RELEVANT |

| Category* | Citation of document, with indication, where appropriate, of the relevant passages | Relevant to claim No. |
|---|---|---|
| Y | JP 2003-513905 A  (Arukamuzu Kontororudo Serabyutikusu Inc.), 15 April, 2003 (15.04.03), Par. Nos. [0007] to [0029] & US 2003/133357 A1      & EP 1242053 A | 1-11 |
| Y | WO 2002/028367 A1  (Kyowa Hakko Kogyo Co., Ltd.), 11 April, 2002 (11.04.02), Full text & US 2004/22938 A1      & EP 1323415 A1 | 1-11 |
| Y | JP 3-169808 A  (Medgenix Group S.A.), 23 July, 1991 (23.07.91), Claims; pages 3, upper left column, line 7 to page 4, lower right column, line 4 & US 5100591 A         & EP 418153 B1 | 1-11 |

| [X]  Further documents are listed in the continuation of Box C. | [ ]  See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>16 June, 2005 (16.06.05) | Date of mailing of the international search report<br>05 July, 2005 (05.07.05) |
|---|---|
| Name and mailing address of the ISA/<br>Japanese Patent Office | Authorized officer |
| Facsimile No. | Telephone No. |

Form PCT/ISA/210 (second sheet) (January 2004)

**INTERNATIONAL SEARCH REPORT**

| International application No. |
| --- |
| PCT/JP2005/005251 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 4-505454 A (Southern Research Institute), 24 September, 1992 (24.09.92), Claims; page 5, upper right column, line 6 to page 7, upper right column, line 11 & US 5407609 A & EP 471036 A | 1-11 |

Form PCT/ISA/210 (continuation of second sheet) (January 2004)

## REFERENCES CITED IN THE DESCRIPTION

**Patent documents cited in the description**

- WO 0228367 A
- JP 2002522468 T
- JP 2002529240 T
- JP 2572554 B
- JP 2659136 B

**Non-patent literature cited in the description**

- *Journal of Molecular Biology,* 1965, vol. 13, 238-252
- *Journal of Cell Biology,* 1975, vol. 66, 621-634
- *FEBS Letters,* 1979, vol. 99, 210-214
- *Archives of Biochemistry and Biophysics,* 1981, vol. 212, 186-194
- *Proceedings of the National Academy of Science United States of America,* 1978, vol. 75, 4194-4198
- Stealth Liposome. CRC Press Inc, 1995, 93-102
- Emulsion and Nanosuspensions for the Formulation of Poorly Soluble Drugs. Scientific Publishers, 1998, 267-294